# FASCICULE DE BREVET EUROPEEN

(11) **EP 1 044 867 B1**
(45) Date de publication et mention de la délivrance du brevet: **14.07.2004**
(21) Numéro de dépôt: 00401055.9
(22) Date de dépôt: 14.04.2000
(51) Int. Cl.: B62D 33/02

(54) **Caisse pour un véhicule industriel, procédé de fabrication d'une telle caisse et véhicule industriel comportant une telle caisse**
Wagenkasten eines Industriefahrzeuges, Verfahren zu seiner Herstellung und Industriefahrzeug mit so einem Wagenkasten
Body for an industrial vehicle, manufacturing process for such a body and industrial vehicle with such a body

(30) Priorité: 16.04.1999 FR 9904846
(43) Date de publication de la demande: 18.10.2000
(73) Titulaire: General Trailers France, 91042 Evry Cedex (FR)
(72) Inventeur: Gressier, Christophe, 59251 Allennes les Marais (FR)
(74) Mandataire: Michelet, Alain

(56) Documents cités:
- DE-U- 29 606 451
- GB-A- 1 431 764
- US-A- 5 454 620
- US-A- 5 765 906

## Description

L'invention concerne une caisse pour un véhicule industriel, un procédé de fabrication d'une telle caisse et un véhicule industriel comportant une telle caisse.

Les véhicules destinés à transporter de la matière en vrac, tel que des pierres, du sable ou encore des graines de céréales ou des betteraves, sont constituées essentiellement d'une caisse et d'un châssis avec un train roulant. La caisse peut être montée sur le châssis, soit en position fixe, soit basculant et notamment basculant d'avant en arrière.

Les caisses utilisées pour de tels véhicules industriels peuvent être considérées, par opposition à des caisses de véhicules transportant des objets sur palette ou des grands objets, comme des unités rigides, les parties constituant le fond et les parois latérales de la caisse étant solidaires l'une de l'autre.

Toutefois, lors de la conception d'une caisse qui doit être obtenue par assemblage d'un fond avec deux parois latérales, se pose la question du type d'assemblage et des détails de conception qui en découlent. La réponse à cette question peut varier selon la forme de la caisse et le matériau utilisé pour sa réalisation.

Une caisse obtenue par assemblage d'un fond avec des éléments latéraux selon les caractéristiques du préambule de la revendication 1 est décrite dans le document US-A-5765906. Cette caisse est plus particulièrement un corps d'un véhicule tel que l'encadrement d'une carrosserie d'un véhicule de tourisme, obtenue par assemblage de profilés extrudés. L'assemblage du fond et des parties latérales est effectué provisoirement par emboîtement et encliquetage des parties latérales dans le bord du fond afin d'éviter le recours à des pinces ou d'autres moyens de fixation provisoire avant soudure. Pour cet assemblage provisoire, les parties latérales sont disposées successivement ou simultanément dans une position approximativement parallèle à un plan de symétrie vertical de la caisse à obtenir. Ensuite les parties latérales sont accrochées chacune par leur profil sur le profil correspondant du fond et pivotées vers l'intérieur jusqu'à emboîtement des profils correspondants du fond et des parties latérales.

Le but de la présente invention est de proposer une caisse pouvant être assemblées à partir d'un petit nombre d'éléments constituant le fond et les parois latérales de la caisse.

Le but de l'invention est atteint selon une conception s'appliquant avantageusement à des caisses essentiellement cylindriques et ouvertes vers le haut. Toutefois, l'invention est également applicable à des caisses ayant une forme essentiellement parallélépipédique.

Ainsi, le but de l'invention est atteint par une caisse pour un véhicule industriel, avec un fond et deux parois latérales, dont le fond et les deux parois latérales sont pourvus, chacun à un bord destiné à une jonction entre le fond et respectivement l'une et l'autre des deux parois latérales, d'un profil permettant un assemblage de la caisse par emboîtement.

Lorsque les éléments constituant le fond et les parois latérales de la caisse sont assemblés par emboîtement, ils sont solidarisés par soudage ou par tout autre procédé approprié.

L'invention concerne également les caractéristiques ci-après considérées isolément ou selon toutes leurs combinaisons techniquement possibles.

L'élément constituant le fond de la caisse est pourvu aux deux bords destinés à la jonction avec l'élément constituant la paroi latérale correspondante, de profils présentant du côté extérieur, destiné à être en regard avec le profil de la paroi correspondante, au moins une partie en retrait.

Chacun des éléments constituant une paroi latérale est pourvu au bord destiné à la jonction avec l'élément constituant le fond, d'un profil présentant du côté intérieur, destiné à être en regard avec le profil correspondant de l'élément constituant le fond, au moins une partie en saillie et complémentaire à la partie en retrait du profil correspondant du fond.

Les profils des éléments constituant les parois latérales et les profils de l'élément constituant le fond sont symétriques par rapport à un axe longitudinal de la caisse.

Les profils sont des profils extrudés.

Les profils sont des pièces rapportées, soudées sur la face correspondante des éléments constituant le fond et les parois latérales, destinés à constituer la face extérieure de la caisse.

Les profils sont des pièces intégrées dans les éléments constituant le fond et les parois latérales, chacun de ces éléments étant un élément extrudé.

Plus particulièrement, les éléments constituant le fond et les parois latérales sont des éléments en aluminium.

Les profils sont disposés de façon à pouvoir recevoir des longerons d'un châssis d'un véhicule industriel.

Le but de l'invention est également atteint par un procédé de fabrication d'une caisse ayant un fond et deux parois latérales, le fond et les parois latérales étant pourvus, chacun à un bord destiné à une jonction entre le fond et respectivement l'une et l'autre des deux parois latérales, d'un profil permettant un assemblage de la caisse par emboîtement.

Conformément à l'invention, ce procédé comprend les étapes disposer les parois latérales successivement ou simultanément dans une position approximativement parallèle à un plan de symétrie vertical de la caisse à obtenir, accrocher chacune des parois latérales par leur profil sur le profil correspondant du fond et pivoter le parois latérales vers l'extérieur jusqu'à emboîtement des profils correspondants du fond et des parois latérales.

Le but de l'invention est également atteint par un véhicule industriel comportant un châssis et une caisse, la caisse comprenant un fond et deux parois latérales pourvus chacun à un bord destiné à une jonction entre le fond et respectivement l'une et l'autre des deux parois latérales, d'un profil permettant un assemblage de la caisse par emboîtement.

La caisse peut être montée fixe ou basculante d'avant en arrière.

D'autres caractéristiques et avantages de l'invention ressortiront de la description d'un mode de réalisation en référence aux dessins. Dans ces dessins:
La Figure 1 représente une caisse selon l'invention en une coupe transversale.
La Figure 2 et la Figure 3 représentent deux profils selon l'invention.
La Figure 4 montre un assemblage des deux profils représentés respectivement sur les Figures 2 et 3, et
La Figure 5 montre une semi-remorque à titre d'exemple d'un véhicule industriel selon l'invention.

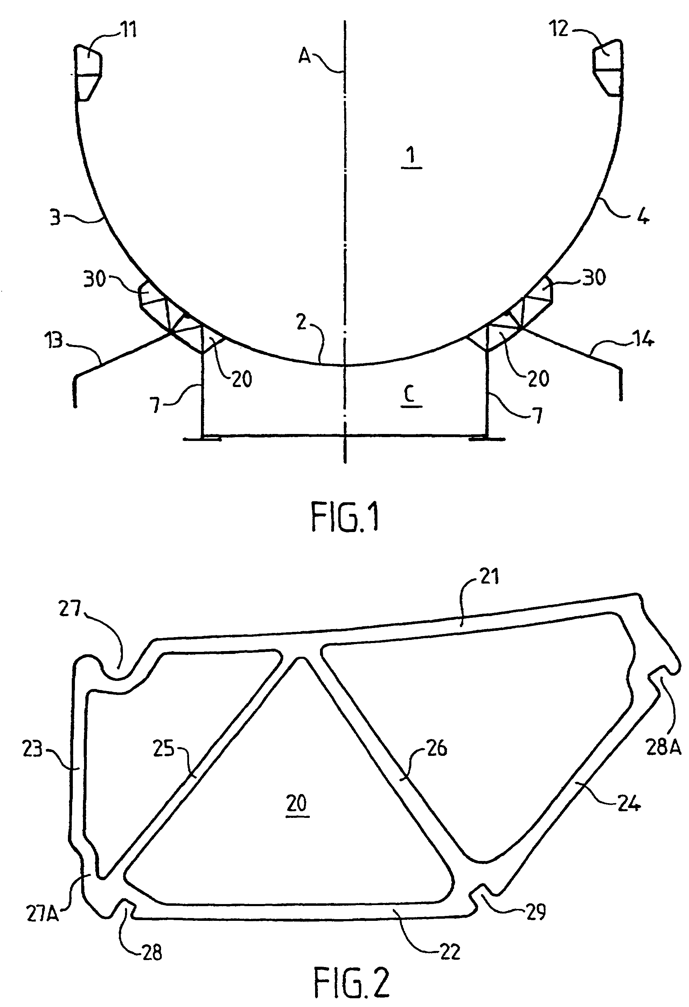

Une caisse 1 selon l'invention comprend un fond 2 et deux parois latérales 3, 4. Le fond et les parois latérales sont formées de façon à constituer une caisse essentiellement cylindrique. En section transversale, la caisse peut avoir la forme d'un polyèdre ou, comme cela est représenté sur la Figure 1, une forme ronde non nécessairement circulaire.

Le fond 2, qui est concave vers le haut dans la position d'utilisation de la caisse, est pourvu sur la face destinée à constituer une partie de la face extérieure de la caisse, et plus particulièrement aux deux bords destinés à constituer des jonctions avec des bords correspondants des éléments formant les parois latérales, de deux profils 20 symétriques par rapport à un axe vertical A de la caisse 1. Ces deux profils 20 peuvent être obtenus à partir d'un même profilé extrudé, coupés à la longueur nécessaire et disposés dans des sens opposés l'un par rapport à l'autre.

Toutefois, il est également concevable que l'élément constituant le fond 2 soit obtenu par extrusion et qu'il comporte, de façon intégrée ou monobloc, les deux profils 20.

De façon comparable à la conception de l'élément formant le fond 2, les deux éléments constituant respectivement la paroi latérale gauche et la paroi latérale droite de la caisse, vu dans la direction de son axe longitudinal, et qui sont également concaves vers l'intérieur de la caisse, sont pourvus au bord destiné à être rattaché au fond 2, sur la face destinée à constituer une partie de la face extérieure de la caisse 1, d'un profil 30 dont une partie est formée de façon à ce que les profils 20 et 30 soient complémentaire pour pouvoir être emboîtés l'un dans l'autre.

Chacun des bords des parois latérales destinées à constituer les bords supérieurs de la caisse 1 est pourvu d'un profilé 11, 12 disposé sur la face destinée à être orientée vers l'intérieur de la caisse 1.

Le profil 20 est formé par une peau supérieure 21 destinée à venir en contact avec le fond 2, une peau inférieure 22, des peaux latérales 23, 24 et, à l'intérieur du profil, de voiles 25, 26 formant des angles aigus avec les peaux 21 et 22 et assurant la stabilité interne du profil. Le profil 20 présente, en section transversale, une forme d'un polyèdre.

Le profil 20 présente par ailleurs une partie 27 en retrait située proche de la jonction de la peau supérieure 21 et de la peau latérale 23 destinée à venir en contact avec une peau correspondante latérale du profil 30. La partie 27 est en retrait par rapport à la surface de la peau 21.

Le profil 20 comprend également une partie en retrait 27A et trois rainures 28, 28A et 29. La partie 27A est située proche de la jonction entre la peau latérale 23 et la peau inférieure 22 et est en retrait par rapport à la surface de la peau latérale 23.

La rainure 28 est située proche de la jonction entre la peau inférieure 22 et la peau latérale 23 et est pratiquée dans la surface de la peau inférieure 22. La rainure 28 est orientée approximativement parallèlement au plan du voile 25. La rainure 28A est située proche de la jonction entre la peau latérale 24 et la peau supérieure 21. La rainure 29 est située à la jonction entre la peau inférieure 22 et la peau latérale 24 et est orientée parallèlement, sinon même dans le plan défini par le voile 26.

Le profil 30 est constitué par une peau supérieure 31, une peau inférieure 32, une peau latérale angulaire ou courbée 33, 33A, une peau latérale 34 et deux voiles 35, 36. Les voiles 35, 36 forment des angles aigus avec les peaux supérieure et inférieure 31,32 et assurent la stabilité interne du profil 30.

Le profil 30 comprend par ailleurs une partie 37 en saillie par rapport à la peau latérale 34 destinée à venir en contact, lors de l'assemblage des profils 20 et 30, avec la peau 23 du profil 20. La forme de la partie 37 est complémentaire à celle de la partie 27 du profil 20. Ceci est d'abord nécessaire pour un assemblage efficace. De plus, cette disposition permet, lorsque la caisse est chargée, de répartir la contrainte résultante à la jonction, sur la soudure et sur la jonction entre les parties 27 et 37. Sans cette disposition, la soudure devrait seule supporter la contrainte

Le profil 30 comprend également deux parties 38, 39 s'étendant approximativement dans des plans parallèles aux plans de la peau supérieure 31, mais en retrait par rapport à la surface de cette dernière.

Le profil 30 est pourvu proche de la jonction de la peau latérale 34 avec la peau inférieure 32, d'une partie 37A en saillie par rapport à la peau latérale 34. La forme de la partie 37A est complémentaire à la forme de la partie 27A du profil 20.

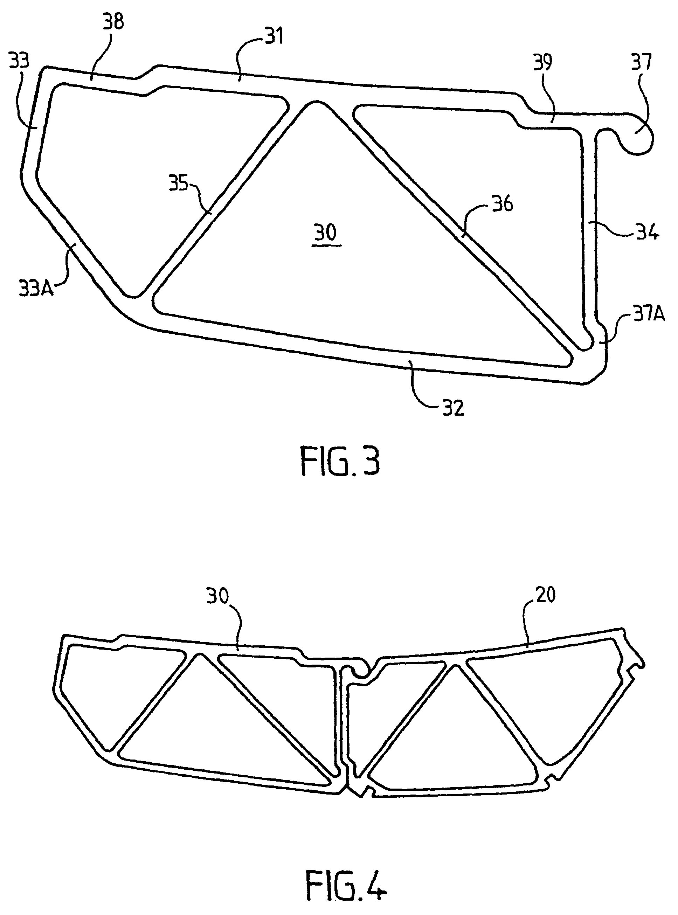

L'assemblage des parois latérales 3, 4 de la caisse 1 avec le fond 2 est effectué en approchant les profils 20 et 30 de façon que s'accroche d'abord la partie 37 du profil 30 dans la partie 27 du profil 20, et que les deux profils 20, 30 sont pivotés l'un par rapport à l'autre, à la manière d'une charnière, de façon que la partie 37A s'approche et vienne en contact avec la partie 27A du profil 20. Deux profils 20, 30 ainsi assemblés sont représentés sur la Figure 4.

Lorsque le fond 2 et les parois latérales 3, 4 sont obtenus par extrusion, ils comprennent, de façon intégrée, le ou les profils correspondants. La manoeuvre d'assemblage décrite ci-avant, est alors exécutée de manière correspondante. En d'autres termes, chacune des parois latérales 3, 4 est accrochée au bord correspondant du fond 2 et pivotée vers l'extérieur, c'est-à-dire en s'éloignant de l'axe symétrique vertical A de la caisse 1, jusqu'à ce que les profils correspondants s'emboîtent. Ensuite, les soudages nécessaires sont effectués pour solidariser les parois latérales 3, 4 avec le fond 2.

Lorsque la caisse 1 est assemblée, des longerons 7 d'un châssis C d'un véhicule industriel ou des éléments ayant pour fonction de constituer un appui sur des longerons d'un châssis d'un véhicule à caisse basculante peuvent être fixés dans les encoches 28A ou 29 des profils 20. Le choix est déterminé par la distance latérale entre les longerons, fonction du type d'essieu. De même, des profilés formant des jupes 13, 14 d'un véhicule industriel peuvent être fixés dans les encoches 28 des profils 20 du fond 2.

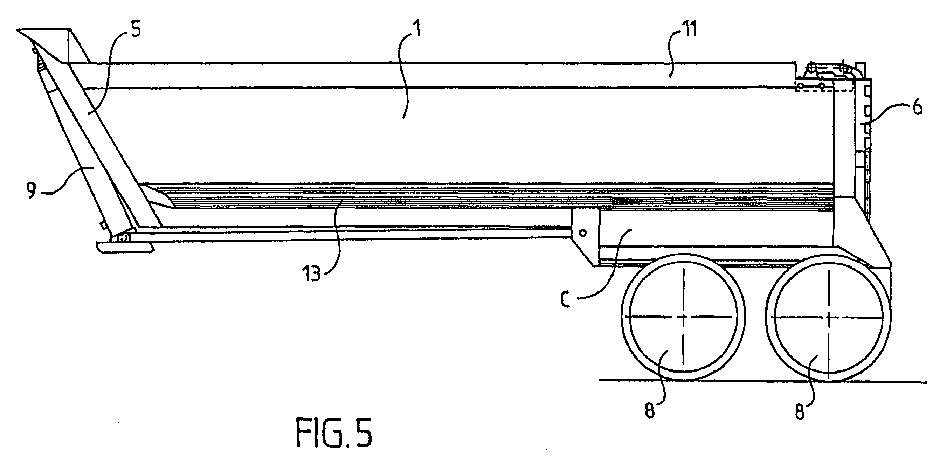

La Figure 5 représente une semi-remorque, à titre d'exemple d'application non limitatif, avec une caisse 1 selon l'invention. La caisse 1 est pourvue, par ailleurs, d'une paroi avant 5 et d'une porte basculante arrière 6. La Figure 5 représente aussi la disposition d'un train roulant 8 à deux essieux et un vérin 9 permettant de basculer la caisse 1 d'avant en arrière.

Les signes de référence insérés après les caractéristiques techniques mentionnées dans les revendications, ont pour seul but de faciliter la compréhension de ces dernières, et n'en limitent aucunement la portée.

## Revendications

1. Caisse pour un véhicule industriel, avec un fond (2) et deux parois latérales (3, 4) pourvues, chacune à un bord destiné à une jonction entre le fond et respectivement l'une et l'autre des deux parois latérales, d'un profil (20, 30) permettant un assemblage de la caisse par emboîtement, dans laquelle chacun des profils (20) du fond (2) présente du côté destiné à être en regard avec le profil (30) de la paroi latérale (3, 4) correspondante, une peau supérieure (21), une peau latérale (23) et une peau inférieure (22), ainsi que, proche de la jonction de la peau supérieure (21) et de la peau latérale (23), au moins une partie (27) en retrait, et, proche de la jonction de la peau latérale (23) et la peau inférieure (22), une partie (27A) en retrait par rapport à la surface de lapeau latérale (23), et en ce que le profil (30) de chacune des parois latérales (3, 4) présente du côté destiné à être en regard avec le profil (20) correspondant du fond (2), une peau latérale (34) et une peau inférieure (32), **caractérisée en ce qu'**au moins une partie (37) en saillie et complémentaire à la partie (27) en retrait du profil (20) correspondant du fond (2) et, proche de la jonction de la peau latérale (34) avec la peau inférieure (32), une partie (37A) en saillie par rapport à la peau latérale (34), la forme de la partie (37A) en saillie étant complémentaire à la forme de la partie (27A) en retrait.

2. Caisse selon la revendication 1, **caractérisée en ce que** les profils (30) des parois latérales (3, 4) et les profils (20) du fond (2) sont symétriques par rapport à un plan de symétrie vertical (A) de la caisse (1).

3. Caisse selon la revendication 1 ou 2, **caractérisée en ce que** les profils (20, 30) sont des profils extrudés.

4. Caisse selon l'une quelconque des revendications 1 à 3, **caractérisée en ce que** les profils (20, 30) sont des pièces rapportées, soudées, sur la face extérieure correspondante du fond (2) et des parois latérales (3, 4).

5. Caisse selon l'une quelconque des revendications 1 à 3, **caractérisée en ce que** les profils (20, 30) sont des pièces intégrées respectivement dans le fond (2) et les parois latérales (3, 4), le fond (2) et les parois latérales (3, 4) étant chacun un élément extrudé.

6. Caisse selon l'une quelconque des revendications 1 à 5, **caractérisée en ce que** les profils (20, 30) sont disposés de façon à pouvoir recevoir des longerons (7) d'un châssis (C) d'un véhicule industriel.

7. Procédé pour obtenir une caisse ayant un fond (2) et deux parois latérales (3, 4), le fond (2) et les parois latérales (3, 4) étant pourvus, chacun à un bord destiné à une jonction entre le fond et respectivement l'une et l'autre des deux parois latérales, d'un profil (20, 30) ayant une peau supérieure (21, 31) et une peau latérale (23, 24) et, proche de la jonction de la peau supérieure et de la peau latérale respectivement une partie (27) en retrait ou une partie (37) en saillie permettant un assemblage de la caisse par emboîtement, **caractérisé par** les étapes:
• disposer les parois latérales (3, 4) successivement ou simultanément dans une position approximativement parallèle à un plan de symétrie vertical (A) de la caisse à obtenir,
• accrocher chacune des parois latérales (3, 4) par la partie (37) en saillie de profil (30) sur la partie (27) en retrait du profil correspondant (20) du fond (2), et
• pivoter les parois latérales (3, 4) vers l'extérieur jusqu'à emboîtement des profils (20, 30) correspondants du fond (2) et des parois latérales (3, 4).

8. Véhicule industriel comportant un châssis (C), et une caisse (1), **caractérisé en ce que** la caisse (1) est une caisse selon l'une quelconque des revendications 1 à 6 ou a été obtenue par la mise en oeuvre du procédé selon la revendication 7.

9. Véhicule selon la revendication 8, **caractérisé en ce que** la caisse (1) est basculante d'avant en arrière.

## Patentansprüche

1. Wagenkasten für ein Industriefahrzeug mit einem Boden (2) und zwei Seitenwänden (3, 4), von denen jede mit einem Rand versehen ist, der zu einer Verbindung zwischen dem Boden und jeweils der einen und der anderen der beiden Seitenwände bestimmt ist, und einem Profil (20, 30), das eine Montage des Wagenkastens durch Einrasten ermöglicht, bei dem jedes dieser Profile (20) des Bodens (2) auf der Seite, die dem Profil (30) der entsprechenden Seitenwand (3, 4) gegenüberliegen soll, einen oberen Steg (21), einen seitlichen Steg (23) und einen unteren Steg (22) ebenso wie nahe der Verbindung des oberen Stegs (21) und des seitlichen Stegs (23) wenigstens einen vertieften Abschnitt (27) und nahe der Verbindung des seitlichen Stegs (23) und des unteren Stegs (22) einen bezüglich der Oberfläche des seitlichen Stegs (23) vertieften Abschnitt (27A) aufweist, und bei dem das Profil (30) jeder der Seitenwande (3, 4) auf der Seite, die dem entsprechenden Profil (20) des Bodens (2) gegenüberliegen soll, einen seitlichen Steg (34) und einen unteren Steg (32) aufweist, **gekennzeichnet durch** wenigstens einen vorspringenden und zum vertieften Abschnitt (27) des entsprechenden Profils (20) des Bodens (2) komplementären Abschnitt, und nähe der Verbindung des seitlichen Stegs (34) mit dem unteren Steg (32) einen bezüglich des seitlichen Stegs (34) vorspringenden Abschnitts (37A), wobei der vorspringende Abschnitt (37A) zur Form des vertieften Abschnitts (27A) komplementär ist.

2. Wagenkasten nach Anspruch 1, **dadurch gekennzeichnet, dass** die Profile (30) der Seitenwände (3, 4) und die Profile (20) des Bodens (2) bezüglich einer vertikalen Symmetrieebene (A) des Wagenkastens (1) symmetrisch sind.

3. Wagenkasten nach Anspruch 1 oder 2, **dadurch gekennzeichnet, dass** die Profile (20, 30) extrudierte Profile sind.

4. Wagenkasten nach einem der Ansprüche 1 bis 3, **dadurch gekennzeichnet, dass** die Profile (20, 30) aus Einzelteilen zusammengesetzt und an der dem Boden (2) und den Seitenwänden (3, 4) entsprechenden Außenseite geschweißt sind.

5. Wagenkasten nach einem der Ansprüche 1 bis 3, **dadurch gekennzeichnet, dass** die Profile (20, 30) jeweils am Boden (2) und an den Seitenwänden (3, 4) verbunden sind, wobei der Boden (2) und die Seitenwände (3, 4) jeweils ein extrudiertes Element sind.

6. Wagenkasten nach einem der Ansprüche 1 bis 5, **dadurch gekennzeichnet, dass** die Profile (20, 30) derart angeordnet sind, dass sie Längsträger (7) eines Chassis (C) eines Industriefahrzeuges aufnehmen können.

7. Verfahren zum Herstellen eines Wagenkastens mit einem Boden (2) und zwei Seitenwänden (3, 4), wobei der Boden (2) und die Seitenwände (3, 4) jeweils mit einem Rand versehen sind, der zu einer Verbindung zwischen dem Boden und jeweils der einen und der anderen der beiden Seitenwände bestimmt ist, einem Profil (20, 30), das einen oberen Steg (21, 31) und einen seitlichen Steg (23, 24) und nahe der Verbindung des oberen Stegs und des seitlichen Stegs jeweils einen vertieften Abschnitt (27) und einen vorspringenden Abschnitt (37) aufweist, die eine Montage des Wagenkastens durch Einrasten ermöglichen, **gekennzeichnet durch** die folgenden Schritte:
- Anordnen der Seitenwände (3, 4) aufeinanderfolgend oder gleichzeitig in einer zu einer vertikalen Symmetrieebene (A) des herzustellenden Wagenkastens etwa parallelen Position,
- Befestigen jeder der Seitenwände (3, 4) **durch** den vorspringenden Abschnitt (37) des Profils (30) an dem vertieften Abschnitt (27) des entsprechenden Profils (20) des Bodens (2), und
- Schwenken der Seitenwände (3, 4) nach oben bis zum Einrasten der entsprechenden Profile (20, 30) des Bodens (2) und der Seitenwände (3, 4).

8. Industriefahrzeug mit einem Chassis (C) und einem Wagenkasten (1), **dadurch gekennzeichnet, dass** der Wagenkasten (1) ein Wagenkasten nach einem der Ansprüche 1 bis 6 ist oder durch die Durchführung des Verfahrens nach Anspruch 7 hergestellt ist.

9. Fahrzeug nach Anspruch 8, **dadurch gekennzeichnet, dass** der Wagenkasten (1) von vorne nach hinten schwenkbar ist.

## Claims

1. A body for industrial vehicle, with a bottom (2) and two side walls (3, 4) fitted, each at an edge at a junction between the bottom and respectively both side walls, with a profile (20, 30) enabling push-in assembly of the body, in which each of the profiles (20) of the bottom (2) exhibits a side intended to face the profile (30) of the corresponding side wall (3, 4), an upper skin (21), a side skin (23) and a lower skin (22), as well as, close to the junction of the upper skin (21) and of the side skin (23), at least one recessed section (27) and, close to the junction of the side skin (23) and the lower skin (22), a section (27A) recessed with respect to the surface of the side skin (23), and in that the profile (30) of each of the side walls (3, 4) exhibits a side intended to face the corresponding profile (20) of the bottom (2), a side skin (34) and a lower skin (32), **characterised in that** at least one protruding section (37) complementary to the recessed section (27) of the corresponding profile (20) of the bottom (2), and close to the junction of the side skin (34) with the lower skin (32), a section (37A) protruding with respect to the side skin (34), the shape of the protruding section (37A) being complementary to the shape of the recessed section (27A).

2. A body according to claim 1, **characterised in that** the profiles (30) of the side walls (3, 4) and the profiles (20) of the bottom (2) are symmetrical relative to a vertical plane of symmetry (A) of the body (1).

3. A body according to claim 1 or 2, **characterised in that** the profiles (20, 30) are extruded profiles.

4. A body according to any of the claims 1 to 3, **characterised in that** the profiles (20, 30) are added parts, welded to the corresponding outer face of the bottom (2) and of the side walls (3, 4).

5. A body according to any of the claims 1 to 3, **characterised in that** the profiles (20, 30) are integral parts, respectively with the bottom (2) and the side walls (3, 4), the bottom (2) and the side walls (3, 4) being each an extruded element.

6. A body according to any of the claims 1 to 5, **characterised in that** the profiles (20, 30) are arranged in order to accommodate the girders (7) of a chassis (C) of an industrial vehicle.

7. A method to manufacture a body having a bottom (2) and two side walls (3, 4), the bottom (2) and the side walls (3, 4) being fitted, each at an edge intended for a junction between the bottom and respectively both side walls, with a profile (20, 30) having an upper skin (21, 31) and a side skin (23, 24) and, close to the junction of the upper skin and of the side skin, respectively a recessed section (27) or a protruding section (37) enabling push-in assembly of the body, **characterised by** the following stages:
• arranging the side walls (3, 4) successively or simultaneously in a position substantially parallel to a vertical plane of symmetry (A) of the body to be produced,
• fastening each of the side walls (3, 4) by the protruding section (37) of the profile (30) to the recessed section (27) of the corresponding profile (20) of the bottom (2), and
• pivoting the side walls (3, 4) outwardly until the corresponding profiles (20, 30) of the bottom (2) and of the side walls (3, 4) are pushed into one another.

8. An industrial vehicle comprising a chassis (C), and a body (1), **characterised in that** the body (1) is a body according to any of the claims 1 to 6 or has been produced by implementing the method according to claim 7.

9. A vehicle according to claim 8, **characterised in that** the body (1) may tilt from front to back.
